# EUROPEAN PATENT SPECIFICATION

(11) **EP 1 069 440 B1**
(45) Date of publication and mention of the grant of the patent: **29.05.2002**
(21) Application number: 00115140.6
(22) Date of filing: 12.07.2000
(51) Int. Cl.: G01V 8/12, A47K 13/24

(54) **Reflection-type optical sensor with reflecting wall surfaces**
Reflex-Lichtschranke mit reflektierenden Wänden
Barrière optique à réflexion avec des murs réfléchissants

(30) Priority: 16.07.1999 JP 20271999
(43) Date of publication of application: 17.01.2001
(73) Proprietor: Seiko Precision Inc., Narashino-shi, Chiba-ken (JP)
(72) Inventor: Nakano, Yoichi, c/o Seiko Precision Inc., Narashino-shi, Chiba-ken (JP); Ito, Akira, c/o Seiko Precision Inc., Narashino-shi, Chiba-ken (JP); Chiba, Yasutoshi, c/o Seiko Precision Inc., Narashino-shi, Chiba-ken (JP); Takahashi, Hiroshi, c/o Seiko Precision Inc., Narashino-shi, Chiba-ken (JP)
(74) Representative: Hoffmann, Eckart, Dipl.-Ing.

(56) References cited:
- EP-B- 0 083 431
- DE-A- 2 656 185
- DE-C- 19 804 684
- US-A- 5 811 798

## Description

The present invention relates to a reflection-type optical sensor.

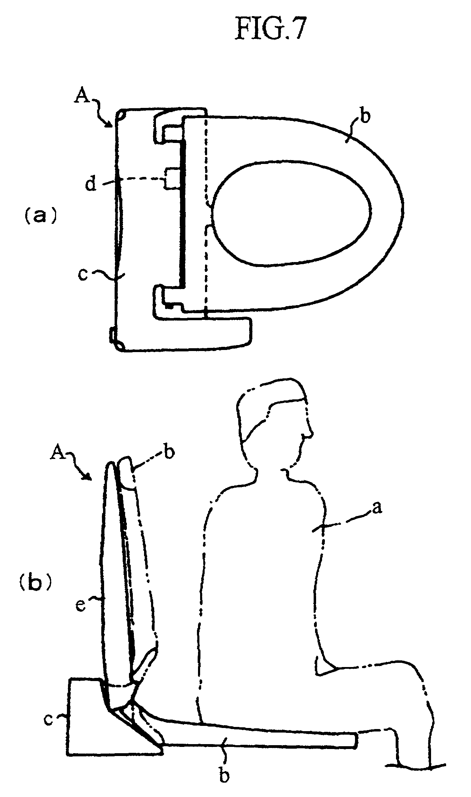

Sometimes, as shown in Figs. 7(a) and 7(b), a reflection-type optical sensor is used as a sitting sensor for a toilet seat device A that can function also as a bidet. Such a sitting sensor senses whether a person a is seated on the toilet seat b or not. The sitting sensor d is mounted to a fixture c to which the toilet seat b is mounted. A cover e is hinged to the fixture c. The sitting sensor d has a light-emitting device such as an infrared diode or the like (not shown) that emits light to the person a via a light-projecting lens. Light reflected from the person a is received by a light-receiving device such as a single position-sensitive device (PSD) via a light-receiving lens spaced from the light-emitting device by a given distance. Where the amount of light received by the light-receiving device is smaller than a given value, the sensor judges that no one is seated. Where the amount is in excess of the given value, the sensor judges that a person is seated. Where the result of the decision is that no person is seated, the toilet device is so controlled that no water is ejected from a water ejecting nozzle even if a nozzle switch is depressed. Normally, this sitting sensor d is accommodated and held in a holder (not shown). This holder is made of a synthetic resin having a dark color such as black. The holder has a light-projecting portion and a light-receiving portion. A light-projecting chamber and a light-receiving chamber that form light passages are formed inside the light-projecting portion and the light-receiving portion, respectively. The light-emitting device is disposed at the rear end of the inside of the light-projecting chamber. The light-receiving device is disposed at the rear end of the inside of the light-receiving chamber. The wall surface of these chambers through which light from the light-emitting device and light to the light-receiving device passes is embossed.

In the above-described prior art sitting sensor, a part of the light projected from the light-emitting device is absorbed by the holder and the amount of projected light decreases due to the color of the holder, the material of the holder, or the surface treatment of the holder wall surface. If the object (person a) to be detected wears clothes of low reflectivity such as black, a part of the light is absorbed by the clothes due to the color of the clothes. Therefore, a sufficient amount of reflected light cannot be obtained. The reflected light is again absorbed by the holder, resulting in attenuation of the light arriving at the light-receiving device. Further attenuation is caused by the embossing. As a result, a large portion of the emitted light may not reach the light-receiving device. Hence, detection is not always performed correctly. In this case, the result of the decision may be that no person is seated. That is, an erroneous decision occurs. Especially, where the object (person a) to be detected is very close to the sensor, if reflection occurs at a quite short distance and the beam of the reflected light blurs, the aforementioned problem becomes conspicuous. This makes it impossible to detect the state that a person is seated. This leads to an erroneous decision.

The problem of the present invention is to provide a reflection-type optical sensor which does not have the above-mentioned disadvantages, i.e. does not provide erroneous detection results.

This problem is solved by a reflection-type optical sensor according to claim 1. Preferred embodiments of the invention are subject-matter of the dependent claims.

The provision of the reflecting surfaces according to claim 1 prevents absorption of light projected from the light-emitting device into the holder and absorption of the light reflected into the holder; otherwise, attenuation would take place. Reflection of light hitting the wall surface illuminated with light is promoted. This assures that enough light is received by the light-receiving device. Hence, erroneous decisions are prevented.

The aforementioned light-receiving device is preferably a split type wherein the light-receiving device comprises at least two parts, which are separated by a division line and contiguous to each other, for making a decision as to whether an object, from which light emitted by the light-emitting device is reflected toward the light-receiving device, is remote or near, based on the position of the light reception on said light-receiving device relative to said division line and on the amount of received light. This certainly prevents erroneous decisions where the object is at a quite short distance.

One embodiment of the present invention is described with reference to the drawings.
- Fig. 1: is a perspective view illustrating one embodiment of the present invention;
- Fig. 2: is a plan view illustrating reflection at a very short distance;
- Fig. 3(a): is a reduced plan view illustrating reflection in a case in which the object to be detected is in a reference position;
- Fig. 3(b): is a reduced plan view illustrating reflection in a case in which the object to be detected is located remotely;
- Fig. 3(c): is a reduced plan view illustrating reflection in a case in which the object to be detected is located nearby;
- Fig. 4: is a block diagram illustrating the structure for making a decision as to whether the distance to the object to be detected is great or small;
- Fig. 5: is a perspective view illustrating another embodiment of the present invention;
- Fig. 6: is a perspective view illustrating a further embodiment of the invention; and
- Figs. 7(a) and 7(b): are a plan view and a side elevation, respectively, illustrating a case in which a reflection-type optical sensor is used for a toilet seat.

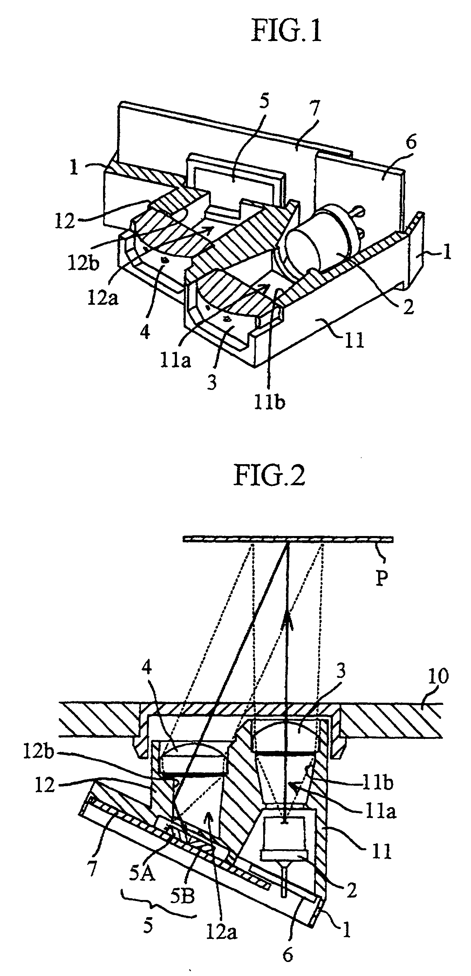

Referring to Figs. 1 and 2, a holder 1 is made of a white synthetic resin such as polycarbonate resin and has a light-projecting portion 11 and a light-receiving portion 12. A light-projecting chamber 11a and a light-receiving chamber 12a that form light passages are formed inside the light-projecting portion 11 and the light-receiving portion 12, respectively. A light-emitting device 2 such as an infrared diode is disposed at the rear end of the inside of the light-projecting chamber 11a. A light-projecting lens 3 is disposed at the front end of the inside of the light-projecting chamber 11a. A light-receiving lens 4 is disposed at the front end of the inside of the light-receiving chamber 12a. A light-receiving device 5 is disposed at the rear end of the inside of the light-receiving chamber 12a. The light-emitting device 2 and the light-receiving device 5 are connected with circuit boards 6 and 7, respectively. The holder 1 is mounted to a mounting board 10.

Those of the wall surfaces of the light-projecting chamber 11a and the light-receiving chamber 12a which are illuminated with light are made to have a high reflectivity and are hereinafter referred to as reflecting surfaces 11b and 12b, respectively. Since the whole wall surface defining the light-projecting chamber 11a is illuminated with light, the whole outer wall surface is the reflecting surface 11b. In the light-receiving chamber 12a, the portion of the wall surface illuminated with light is the reflecting surface 12b. In Fig. 2, the left wall surface of the light-receiving chamber 12a is the reflecting surface 12b.

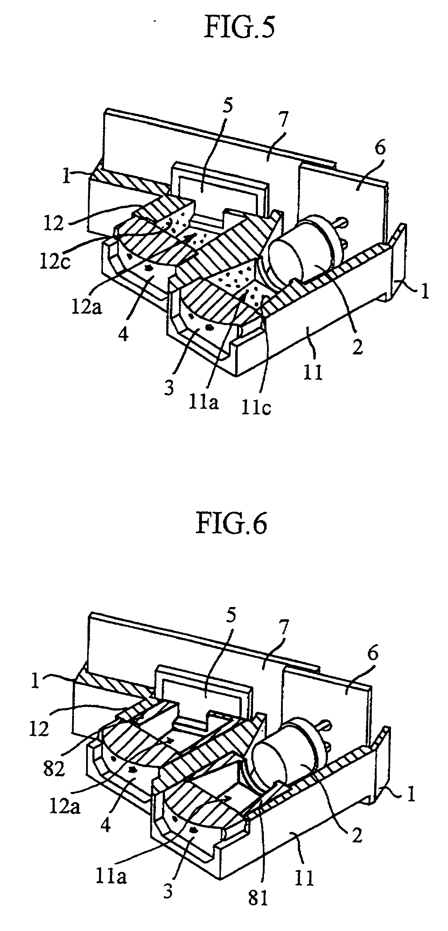

These reflecting surfaces 11b and 12b are formed as inner surfaces of the holder 1. Furthermore, the reflecting surfaces 11b and 12b are formed as smooth surfaces. That is, reflecting surfaces 11b and 12b promote reflection of light, while maintaining the colors thereof, because of surface processing (treatment). As indicated by dots in Fig. 5, they may be painted in white, and reflecting surfaces 11c and 12c may be formed as painted surfaces or surface areas that promote reflection of light while maintaining the colors thereof. In this case, the number of degrees of freedom of the material and the color of the holder 1 is increased. In Fig. 5, substantially identical elements as their counterparts of Fig. 1 are indicated by the same symbols and will not be described below.

Because of the provision of the reflecting surfaces 11b, 12b (11c, 12c), if an object P to be detected is at a very short distance as shown in Fig. 2, when reflected light transmitted through the light-receiving lens 4 is again reflected by the reflecting surface 12b (12c), the reflection of light is promoted. Almost no loss of light takes place. This assures that a sufficient amount of light is received by the light-receiving element 5. Consequently, no misjudgment occurs.

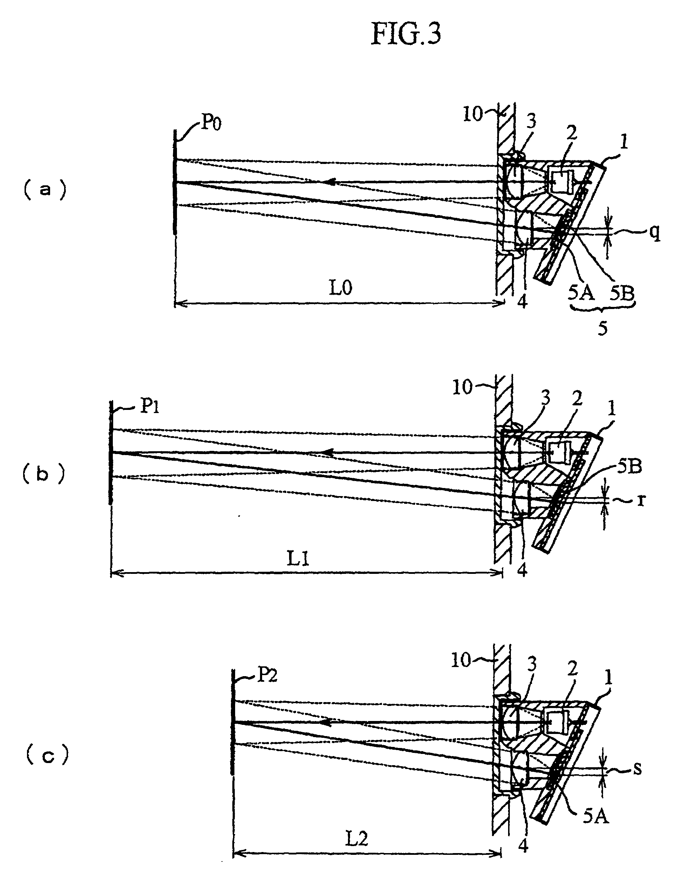

Preferably, the light-receiving device 5 is of a split type that allows to decide whether the object is remote or near, based on the position at which light is received and on the amount of received light. In the illustrated example of Fig. 3, the light-receiving device is split into two light-receiving elements 5A and 5B bonded together along a given division line. This division line is described next. As shown in Fig. 3(a), where an object P₀ to be detected is at a reference distance L₀ from the light-projecting lens 3, light emitted from the light-emitting device 2 is reflected from the detected object P₀. Hereinafter distinction is made between the term "light beam" referring to light passing through a lens, and the term "light ray" referring to the center ray of such a light beam. The reflected light ray passes through the center of the light-receiving lens 4. The position at which the light ray is received by the light-receiving device 5 is taken as the division line. One side (the lower side in Fig. 3(a)) of the light-receiving device 5 with respect to this division line is the light-receiving element 5A, while the other side (the upper side of Fig. 3(a)) is the light-receiving element 5B. This division line is at a distance q from the lens center axis passing through the center of the light-receiving lens 4, q being measured in the direction parallel to the mounting board 10.

Fig. 3(b) shows a case in which an object P₁ to be detected is at a distance L₁ greater than the reference distance L₀. In this case, light emitted from the light-emitting device 2 is reflected by the detected object P₁. The reflected light ray passes through the center of the light-receiving lens 4. The position at which the light ray is received by the light-receiving device 5 is at a distance r from the lens center axis. Since r < q, the light beam is mainly received by the light-receiving element 5B in this case.

Fig. 3(c) shows a case in which an object P₂ to be detected is at a distance L₂ shorter than the reference position L₀. In this case, light emitted by the light-emitting device 2 is reflected by the detected object P₂. The reflected light ray passes through the center of the light-receiving lens 4. The position at which the light ray is received by the light-receiving device 5 is at a distance s from the center axis. Since s > q, the light beam is mainly received by the light-receiving element 5A in this case.

In the case of quite short distances, the reflected light once hits the reflecting surface 12b of the light-receiving chamber 12a and is reflected as shown in Fig. 2. The reflected light is received by the light-receiving element 5A. Since the reflection of the reflected light is promoted by the reflecting surface 12b, the reflected light is not attenuated unlike in the prior art technique. Thus, reliably a sufficient amount of light is received by the light-receiving element 5A.

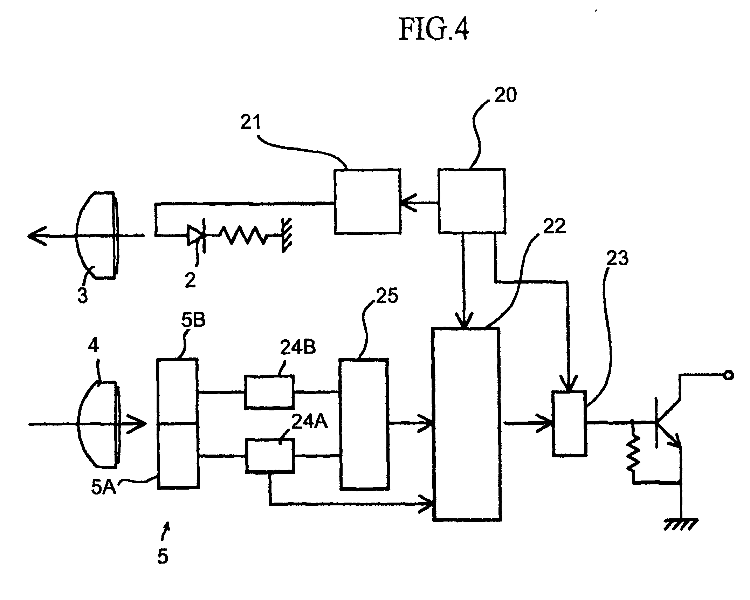

Fig. 4 is a block diagram showing a structure for making a decision as to whether an object is remote or near. It is formed on circuit boards 6 and 7. That is, a timing signal-generating means 20 supplies a signal to a light-emitting device driver means 21, an output decision means 22, and an output latch means 23. The light-emitting device driver means 21 controls the emission of light from the light-emitting device 2. The amounts of light received by the light-receiving elements 5A and 5B are judged by received light amount decision means 24A and 24B, respectively. Information about the received amounts of light is supplied to a magnitude decision means 25. Information about the amount of received light from the received light amount decision means 24A is also sent to the output decision means 22.

In the case of Fig. 3(b), for example, the magnitude decision means 25 judges that the amount of light received by the light-receiving element 5B is greater than the amount of light received by the light-receiving element 5A and so the output decision means 22 produces an output signal indicating a far distance and sends it to the output latch means 23, where the signal is latched.

In the case of Fig. 3(c), the magnitude decision means 25 judges that the amount of light received by the light-receiving element 5A is greater than the amount of light received by the light-receiving element 5B and so the output decision means 22 produces an output signal indicating a near distance and sends it to the output latch means 23, where the signal is latched.

In the case of Fig. 3(a), the amount of light received by the light-receiving element 5A is substantially equal to the amount of light received by the light-receiving element 5B. In this case, the magnitude decision means 25 produces an output signal indicating a near distance. The output decision means 22 produces an output signal indicating a near distance and sends it to the output latch means 23, where the signal is latched.

In the case of very short distances as shown in Fig. 2, the received light amount decision means 24A checks whether the amount of received light is in excess of a given level. If so, an output signal indicating a near distance is directly supplied to the output decision means 22. The output decision means 22 then produces, irrespective of any signal from the magnitude decision means 25, an output signal indicating a near distance and sends it to the output latch means 23, where the signal is latched.

Where this reflection-type optical sensor is used for a toilet seat, if an output signal indicating a far distance is latched, it is assumed that no one is seated. If an output signal indicating a near distance is latched, it is assumed that a person is seated. In this way, if an output signal indicating a near distance is latched, the toilet device is so controlled that water is ejected from the water ejecting nozzle.

Fig. 6 shows a further embodiment of the present invention. Light-reflecting cylinders 81 and 82 acting as auxiliary members are inserted into given positions in the light-projecting portion 11 and the light-receiving portion 12, respectively, of the holder 1. Thus they form the surfaces of the light-projecting chamber 11a and the light-receiving chamber 12a which are illuminated with light. In Fig. 6, those elements that are substantially identical with their counterparts of Fig. 1 are indicated by the same numerals and will not be described below.

The light-reflecting cylinders 81 and 82 may be made of white polycarbonate resin in the same way as the holder 1 described previously. In this case, the color of the holder 1 is not limited to white. The light-reflecting cylinders 81 and 82 may be made of white polycarbonate resin, and the other portions may be made of a non-white polycarbonate resin. That is, the holder 1 may contain elements of different colors. Furthermore, the holder 1 may be molded from a non-white polycarbonate resin, and the light reflecting cylinders 81 and 82 may be made of sheets of aluminum and inserted into the holder 1 after molding. Alternatively, the light-reflecting cylinders 81 and 82 may be made of sheets of aluminum, and inserted into a mold for insert-molding of the holder 1.

As described thus far, in the present invention, those of the wall surfaces of the light-projecting chamber and the light-receiving chamber in the holder which are illuminated with light are formed as reflecting surfaces for promoting reflection of light. Therefore, attenuation of light upon reflection at the reflecting surfaces is suppressed due to the high reflectivity thereof. Consequently, the light-receiving device receives a sufficient amount of light. Hence, erroneous decisions can be avoided.

## Claims

1. A reflection-type optical sensor comprising:
a light-projecting portion (11) comprising a light-projecting chamber (11a), and a light-receiving portion (12) comprising a light-receiving chamber (12a), formed in a holder (1);
a light-projecting lens (3) and a light-emitting device (2) disposed in the light-projecting chamber (11a); and
a light-receiving lens (4) and a light-receiving device (5) disposed in the light-receiving chamber (12a);
wherein said light-projecting chamber (11a) and said light-receiving chamber (12a) have wall surfaces formed as reflecting surfaces (11b, 12b; 11c, 12c; 81, 82) for promoting reflection of light.

2. The sensor of claim 1, wherein said reflecting surfaces are inner surfaces (11b, 12b) of said holder (1).

3. The sensor of claim 1, wherein said reflecting surfaces are painted inner surfaces (11c, 12c) of said holder (1).

4. The sensor of claim 1, wherein said reflecting surfaces are formed by inner surfaces of auxiliary members (81, 82) inserted into said holder (1).

5. The sensor of any one of claims 1 to 4, wherein said reflecting surfaces (11b, 12b; 11c, 12c; 81, 82) promote reflection of light while maintaining the colors thereof.

6. The sensor of any one of claims 1 to 5, wherein said light-receiving device (5) comprises at least two parts (5A, 5B), which are separated by a division line and contiguous to each other, for making a decision as to whether an object (P), from which light emitted by the light-emitting device (2) is reflected toward the light-receiving device (5), is remote or near, based on the position of the light reception on said light-receiving device (5) relative to said division line and on the amount of received light.

## Patentansprüche

1. Reflex-Lichtschranke, umfassend:
einen Lichtsendeabschnitt (11) mit einer Lichtsendekammer (11a) und einen Lichtempfangsabschnitt (12) mit einer Lichtempfangskammer (12a), die in einem Halter (1) gebildet sind;
eine Lichtsendelinse (3) und eine Lichtemissionsvorrichtung (2), die in der Lichtsendekammer (11a) angeordnet sind; und
eine Lichtempfangslinse (4) und eine Lichtempfangsvorrichtung (5), die in der Lichtempfangskammer (12a) angeordnet sind;
wobei die Lichtsendekammer (11a) und die Lichtempfangskammer (12a) Wandflächen aufweisen, die zur Förderung der Lichtreflexion als reflektierende Oberflächen (11b, 12b; 11c, 12c; 81, 82) ausgebildet sind.

2. Lichtschranke nach Anspruch 1, bei der die reflektierenden Oberflächen Innenflächen (11b, 12b) des Halters (1) sind.

3. Lichtschranke nach Anspruch 1, bei der die reflektierenden Oberflächen angestrichene Innenflächen (11c, 12c) des Halters (1) sind.

4. Lichtschranke nach Anspruch 1, bei der die reflektierenden Oberflächen durch Innenflächen von Hilfselementen (81, 82) gebildet sind, die in den Halter (1) eingesetzt sind.

5. Lichtschranke nach einem der Ansprüche 1 bis 4, bei der die reflektierenden Oberflächen (11b, 12b; 11c, 12c; 81, 82) die Reflexion von Licht unter Beibehaltung von dessen Farben fördern.

6. Lichtschranke nach einem der Ansprüche 1 bis 5, bei der die Lichtempfangsvorrichtung (5) mindestens zwei Teile (5A, 5B) umfaßt, die durch eine Trennlinie unterteilt und aneinander angrenzend sind, zur Entscheidung, auf der Basis der Position des Lichtempfangs auf der Lichtempfangsvorrichtung (5) bezüglich der Trennlinie und auf der Basis der empfangenen Lichtmenge, ob ein Objekt (P), von dem von der Lichtemissionsvorrichtung (2) emittiertes Licht zur Lichtempfangsvorrichtung (5) reflektiert wird, entfernt oder nahe ist.

## Revendications

1. Capteur optique de type à réflexion comportant :
une partie (11) de projection de lumière comportant une chambre (11a) de projection de lumière, et une partie (12) de réception de lumière, comportant une chambre (12a) de réception de lumière, formées dans un support (1);
une lentille (3) de projection de lumière et un dispositif (2) d'émission de lumière disposés dans la chambre (11a) de projection de lumière ; et
une lentille (4) de réception de lumière et un dispositif (5) de réception de lumière disposés dans la chambre (12a) de réception de lumière ;
dans lequel la chambre (11a) de projection de lumière et la chambre (12a) de réception de lumière comportent des surfaces de paroi formées en tant que surfaces (11b, 12b ; 11c, 12c ; 81, 82) de réflexion pour favoriser la réflexion de lumière.

2. Capteur suivant la revendication 1, dans lequel les surfaces de réflexion sont des surfaces (11b, 12b) intérieures du support (1).

3. Capteur suivant la revendication 1, dans lequel les surfaces de réflexion sont des surfaces (11c, 12c) intérieures peintes du support (1).

4. Capteur suivant la revendication 1, dans lequel les surfaces de réflexion sont formées par des surfaces intérieures d'éléments (81, 82) auxiliaires insérés dans le support (1).

5. Capteur suivant l'une quelconque des revendications 1 à 4, dans lequel les surfaces (11b, 12b ; 11c, 12 ; 81, 82) de réflexion favorisent la réflexion de lumière tout en conservant leurs couleurs.

6. Capteur suivant l'une quelconque des revendications 1 à 5, dans lequel le dispositif (5) de réception de lumière comporte au moins deux parties (5A, 5B) qui sont séparées par une ligne de séparation et contiguës l'une à l'autre, pour prendre une décision sur le point de savoir si un objet (P), duquel de la lumière émise par le dispositif (2) d'émission de lumière est réfléchie en direction du dispositif (5) de réception de lumière, est éloigné ou à proximité, sur la base de la position de la réception de lumière sur le dispositif (5) de réception de lumière par rapport à la ligne de séparation et sur la base de la quantité de lumière reçue.
